# EUROPEAN PATENT SPECIFICATION

(11) **EP 1 484 266 B1**
(45) Date of publication and mention of the grant of the patent: **08.11.2006**
(21) Application number: 04011661.8
(22) Date of filing: 17.05.2004
(51) Int. Cl.: B65G 13/04

(54) **Continuous conveyor with motorized rollers**
Stetigförderer mit motorisierten Förderrollen
Convoyeur en continu équipé de rouleaux motorisés

(30) Priority: 03.06.2003 IT mo20030164
(43) Date of publication of application: 08.12.2004
(73) Proprietor: Meta System S.p.A., 42100 Reggio Emilia (IT)
(72) Inventor: Simonazzi, Giuseppe, 42100 Reggio Emilia (IT)
(74) Representative: Brogi, Graziano

(56) References cited:
- WO-A-01/38205
- US-A- 3 945 413
- US-A- 6 158 574
- US-B1- 6 460 690

## Description

The present invention relates to a continuous conveyor with motorized rollers, of the type set forth in the document US-A-6.158.574.

Continuous conveyors with freely rotating rollers and continuous conveyors with motorized or driven rollers are known and are used in various industrial fields for conveying goods in packages; they are substantially constituted by a plurality of rollers arranged in succession one after the other so that their opposite ends are supported so that they can rotate respectively by two longitudinal side walls of a supporting structure.

Conveyors with freely rotating rollers that lack motor means are used when it is possible to give or utilize a predefined negative slope (descending in the direction of advancement) to/of the path of the goods, so as to utilize the force of gravity to promote the advancement of said goods.

Motorized roller conveyors are instead provided with motor means, which drive the motion of the motor rollers by way of transmission means; they are used mainly for conveyance along horizontal or rising paths.

The motor means are generally constituted by an electric motor provided with a speed variator; the transmission means currently used are instead of the type with chains provided with rollers, which are wound around sprockets that are keyed proximate to one of the two opposite ends of each roller, or are of the type with belts wound around grooved pulleys that are keyed proximate to one of the two opposite ends of each roller, or are of the type with pairs of bevel gears formed at one of the two opposite ends of each roller, one of the two bevel gears being keyed proximate to the end of the roller and the complementary bevel gear being keyed on a transmission shaft.

These continuous conveyors with motorized rollers are not free from drawbacks, which include the fact that they are structurally and constructively very complicated and expensive, have significant overall dimensions and weight, and require laborious and awkward operations for assembly and disassembly as well as for maintenance and replacement.

The aim of the present invention is to eliminate the above-mentioned drawbacks of continuous conveyors with motorized rollers of the known type, by providing a continuous conveyor with motorized rollers that is structurally and constructively simple and low in cost, has reduced dimensions and weight, and allows to simplify and facilitate assembly and disassembly operations and maintenance and replacement interventions.

Within this aim, an object of the present invention is to provide a continuous conveyor that is simple, relatively easy to provide in practice, safe in use, effective in operation, and has a relatively low cost.

This aim and this and other objects that will become better apparent hereinafter are achieved by a continuous conveyor with motorized rollers, according to the invention, and having the features set forth in claim 1.

Further characteristics and advantages of the present invention will become better apparent from the following detailed description of a preferred but not exclusive embodiment of a continuous conveyor with motorized rollers, illustrated by way of non-limiting example in the accompanying drawings, wherein:

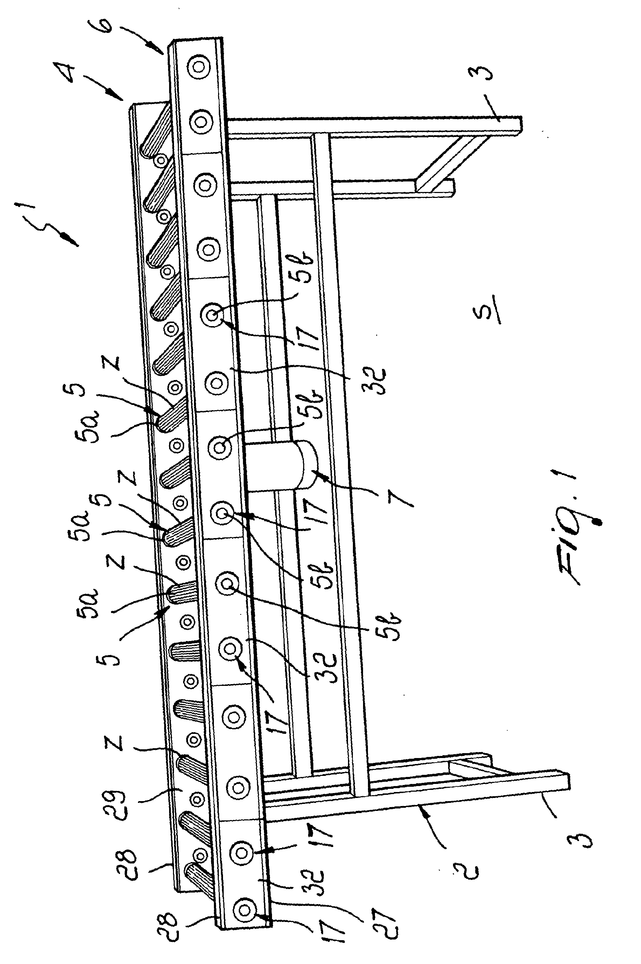

Figure 1 is a schematic perspective view of a conveyor according to the invention;

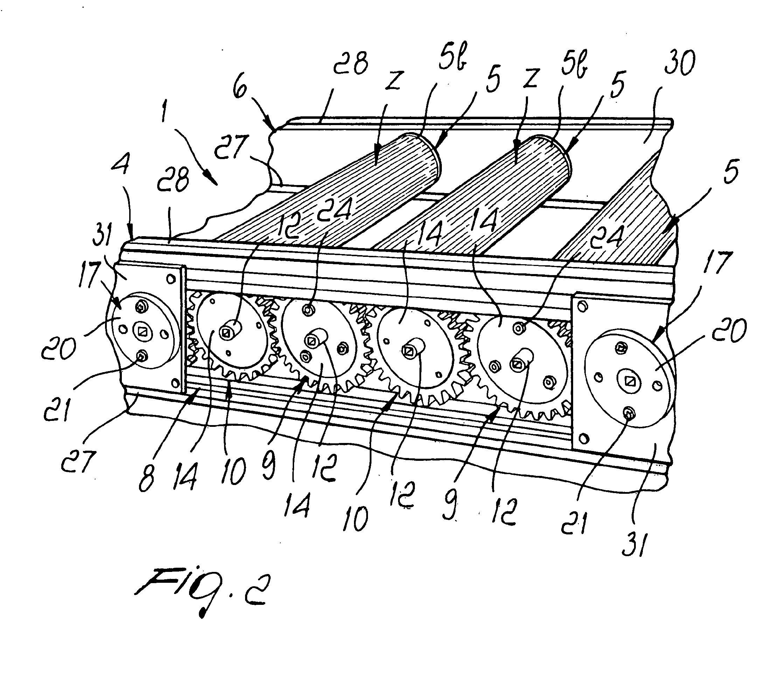

Figure 2 is a schematic and partially cutout perspective view of a portion of the conveyor according to the invention;

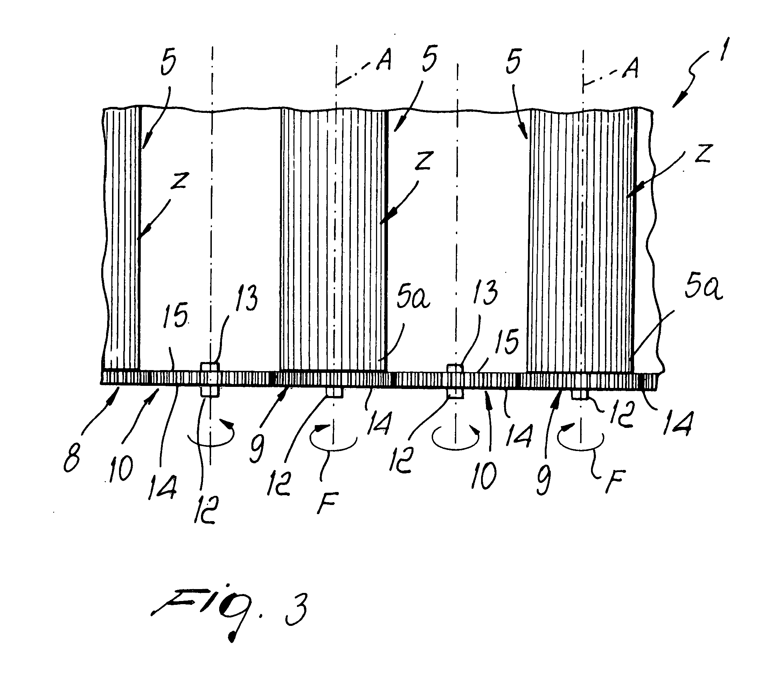

Figure 3 is a schematic plan view of the transmission means of the conveyor according to the invention;
Figure 4 is a schematic front view of a detail of one of the two side walls of the conveyor according to the invention;

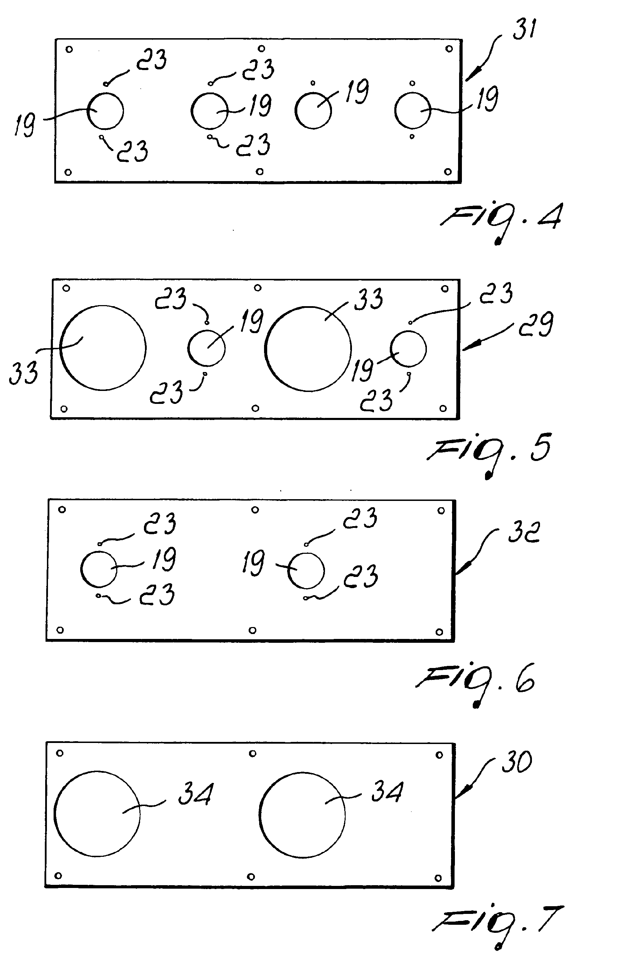

Figure 5 is a schematic front view of another detail of one of the two side walls of the conveyor according to the invention;
Figure 6 is a schematic front view of a detail of the other of the two side walls of the conveyor according to the invention;
Figure 7 is a schematic front view of another detail of the other of the two side walls of the conveyor according to the invention;

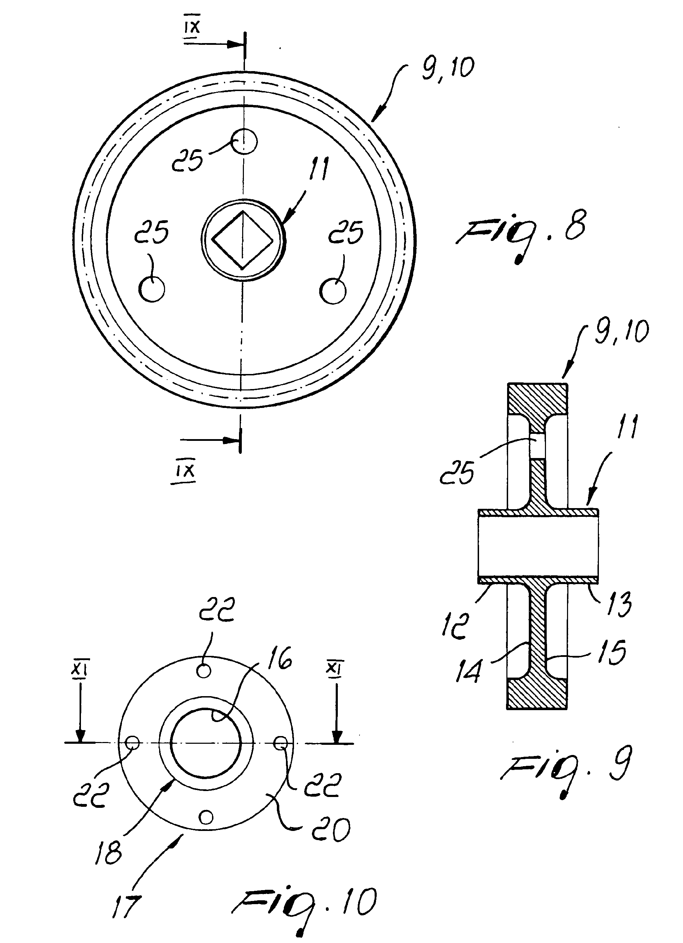

Figure 8 is a schematic front view of a spur gear or of an auxiliary spur gear of the transmission means of the conveyor according to the invention;
Figure 9 is a schematic sectional view, taken along the line IX-IX, of the gear of Figure 8;
Figure 10 is a schematic front view of a detail of the conveyor according to the invention;

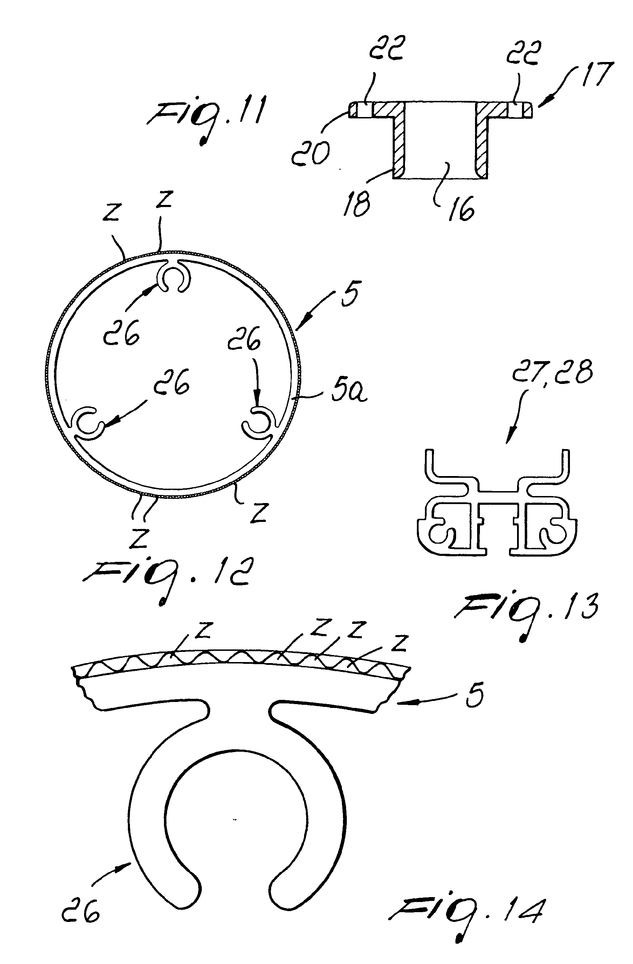

Figure 11 is a schematic sectional view, taken along the line XI-XI, of the detail of Figure 10;
Figure 12 is a schematic front view of the first end of the rollers of the conveyor according to the invention;
Figure 13 is a schematic front view of a detail of the side walls of the conveyor according to the invention;
Figure 14 is a schematic enlarged-scale view of a detail of Figure 12.

With reference to the figures, the reference numeral 1 generally designates a continuous conveyor with motorized rollers.

The conveyor 1 comprises a frame 2, which is provided with feet 3 for resting on the ground S and supports two longitudinal side walls: a first side wall 4, which rotatably supports first ends 5a of a plurality of rollers 5, and a second side wall 6, which rotatably supports second ends 5b, which lie opposite with respect to the first ends, of the rollers 5.

The rollers 5 are arranged in succession one after the other so as to form a surface for the advancement of packaged material.

The conveyor 1 further comprises motor means 7, which by way of transmission means 8 actuate the rollers 5 so that they rotate about their longitudinal axis A.

The transmission means 8 comprise a spur gear, which is constituted by a gear 9 that can be associated rigidly and coaxially at the tip of the first end 5a of each roller 5, and an auxiliary spur gear, which is constituted by an auxiliary gear 10, which is interposed as an idler gear between the gears 9 fitted at the end of each pair of successive rollers 5.

The gears 9 and the auxiliary gears 10 are spur gears with straight teeth, have a substantially identical pitch diameter and are arranged so that their respective axes are mutually parallel.

The motor means 7 are associated with at least one of the intermediate or end rollers 5 or with at least one of the auxiliary gears 10, to which they transmit the input rotary motion.

Each one of the other rollers 5, by way of the auxiliary gears 10, is driven by the roller 5 that lies in front of it and drives the roller 5 that follows it along the direction of rotation; the auxiliary gears 10 are designed to transmit the motion between the consecutive rollers 5, keeping the transmission ratio unchanged, as if the gears 9 of two successive rollers 5 were meshed directly, and to impart to the rollers 5 a concordant direction of rotation, designated by the arrows F; they are designed to reverse the direction of rotation that would occur if the gears 9 of two consecutive rollers 5 meshed directly.

The gears 9 and the auxiliary gears 10 have the same shape, and each one comprises a hub 11 that is provided at its opposite ends with extensions 12 and 13 that protrude respectively from the opposite faces 14 and 15 of said gears and can be accommodated rotatably in corresponding rotation seats 16 formed in, or associable with, the first side wall 4.

The rotation seats 16 are formed by bushes 17 that are rigidly associable at least with the first side wall 4 and comprise a tubular portion 18, in which the rotation seat 16 is provided and can be inserted, substantially snugly, in a corresponding hole 19 that is formed in the first side wall 4 and is connected to a flange 20 for coupling to the first side wall 4, anchoring means such as threaded means 21 being provided and engaging first holes 22 formed in the flange 20 and second holes 23 formed in the first side wall 4 proximate to the holes 19.

Means for detachably fixing the sprockets 9 at the tip of the first end 5a of the rollers 5 are provided, and are constituted for example by screw means that can be inserted in through holes 25 that are formed in the gears 9 and can engage in corresponding receptacles formed at the tip of the first end 5a of the rollers 5, each being constituted by a circular arc 26 that lies on a plane that is substantially perpendicular to the axis A and is formed so as to protrude centripetally from the inner lateral surface of the rollers 5.

Advantageously, the rollers 5 are internally hollow and have a plurality of knurlings Z, which are formed on at least one portion of their outer lateral surface and are suitable to produce contact friction with the packages of material that advance along the conveyor 1.

Conveniently, the knurlings Z run longitudinally along the rollers 5 and are formed with a substantially constant pitch on the entire outer lateral surface of said rollers.

In a preferred embodiment, the circular arcs 26 (receptacles) are three and are distributed with a constant pitch along the perimetric circumference of the inner lateral surface of the rollers 5.

Both the first side wall 4 and the second side wall 6 comprise two longitudinal members, a lower longitudinal member 27 and an upper longitudinal member 28, which are arranged so as to be substantially mutually parallel and are superimposed on a substantially vertical plane.

The first side wall 4 and the second side wall 6 are closed on their inner side, the one directed toward the rollers 5, and on their outer side, the one that lies opposite the rollers 5, by inner plates, designated respectively by the reference numerals 29 and 30, and by outer plates, designated respectively by the reference numerals 31 and 32, which are rigidly and detachably associable with the two longitudinal members 27 and 28.

The transmission means 8, i.e., the gears 9 and the auxiliary gears 10, are supported between the lower longitudinal member 27 and the upper longitudinal member 28 of the first side wall 4.

Passage openings 33 for the rollers 5 and holes 19 for the insertion of the bushes 17 associated with the auxiliary gears 10 are formed in the inner plate 29 of the first side wall 4.

The holes 19 for inserting the bushes 17 associated with the gears 9 and with the auxiliary gears 10 are formed in the outer plate 31 of the first side wall 4; the auxiliary gears 10 are supported so that they can rotate by two mutually opposite bushes 17, one of which supports the extension 12 while the other one supports the extension 13.

Likewise, the second side wall 6 rotatably supports the second ends 5b of the rollers 5.

Accordingly, in the inner plate 30 of the second side wall 6 there are passage openings 34, similar to the openings 33, for the rollers 5, while in the outer plate 32 of the second side wall 6 there are holes 19 for inserting the bushes 17 that rotatably support second ends 5b of the rollers 5.

Conveniently, the gears 9 and the auxiliary gears 10 are made of POM, polyamide, polyacetal or the like, while the bushes 17 are made of nylon.

The motor means 7 are of a conventionally known type and can be advantageously associated with a control and driving unit.

In practice it has been found that the described invention achieves the intended aim and object.

The invention thus conceived is susceptible of numerous modifications and variations, all of which are within the scope of the appended claims.

All the details may further be replaced with other technically equivalent ones.

In practice, the materials used, as well as the shapes and the dimensions, may be any according to requirements without thereby abandoning the scope of the protection of the appended claims.

## Claims

1. A continuous conveyor with motorized rollers, comprising two longitudinal side walls (4, 6) that rotatably support respectively the opposite ends (5a, 5b) of a plurality of rollers (5) arranged in succession one after the other, and motor means (7), which are associated with motion transmission means (8) adapted to actuate said rollers (5) so that they rotate about their longitudinal axis (A), said transmission means (8) comprising a spur gear (9), which is rigidly associable proximate to a first end (5a) of each one of said rollers (5), and an auxiliary spur gear (10), which is interposed as an idler gear between the spur gears (9) of each pair of successive rollers (5), and each one of the other rollers (5) being driven by the roller (5) that precedes it and driving the roller (5) that follows it,
**characterized in that** said motor means (7) is associated with at least one of said rollers (5) or with at least one of said auxiliary spur gears (10), said spur gears (9) and said auxiliary spur gears (10) comprising a hub (11) that has, at its opposite ends, extensions (12, 13) that protrude respectively from the opposite faces (14, 15) of said gears (9, 10) and can be accommodated so that they can rotate in corresponding rotation seats (16) that are formed in said side walls (4, 6) or are associable therewith.

2. The conveyor according to claim 1, **characterized in that** said spur gears (9) are rigidly associable at the tip of said first end (5a).

3. The conveyor according to one or more of the preceding claims, **characterized in that** it comprises means (24, 25) for fixing said spur gears (9) to said rollers (5).

4. The conveyor according to one or more of the preceding claims, **characterized in that** said spur gears (9) and said auxiliary spur gears (10) are of the type with straight teeth.

5. The conveyor according to one or more of the preceding claims, **characterized in that** said spur gears (9) and said auxiliary spur gears (10) have substantially the same pitch diameter.

6. The conveyor according to one or more of the preceding claims, **characterized in that** said spur gears (9) and auxiliary spur gears (10) have the same shape.

7. The conveyor according to one or more of the preceding claims, **characterized in that** said rotation seats (16) are formed by bushes (17) that are rigidly associable with said side walls (4, 6).

8. The conveyor according to claim 7, **characterized in that** said bushes (17) comprise a tubular portion (18) that forms said rotation seat (16) and can be inserted substantially snugly in a corresponding hole (19) formed in said side walls (4, 6) and is connected to a flange (20) for coupling to said side walls (4, 6), means (21) being provided for anchoring said flange (20) to said side walls (4, 6).

9. The conveyor according to claim 8, **characterized in that** said anchoring means (21) are of the threaded type.

10. The conveyor according to one or more of the claims 3-9,
**characterized in that** said fixing means comprise screw means (24) that can be inserted in through holes (25) that are formed in said spur gears (9) and can engage corresponding receptacles (26) formed at the tip of said first end (5a) of the rollers (5).

11. The conveyor according to one or more of the preceding claims, **characterized in that** said rollers (5) are internally hollow and comprise an outer lateral surface and an inner lateral surface.

12. The conveyor according to any of the claims 10 or 11,
**characterized in that** said receptacles (26) comprise at least one circular arc that lies on a plane that is substantially perpendicular to the longitudinal axis (A) of said rollers (5) and is formed so as to protrude centripetally from the inner lateral surface of said rollers (5).

13. The conveyor according to one or more of the claims 10-12,
**characterized in that** there are three of said receptacles (26), distributed with a constant pitch along the perimetric circumference of said inner lateral surface.

14. The conveyor according to one or more of the preceding claims, **characterized in that** said rollers (5) comprise knurlings (Z) formed on at least one portion of their outer lateral surface.

15. The conveyor according to claim 14, **characterized in that** said knurlings (Z) lie longitudinally along the outer lateral surface of said rollers (5).

16. The conveyor according to one of the claims 14 or 15,
**characterized in that** said knurlings (Z) are distributed with a substantially constant pitch along the entire outer lateral surface of said rollers (5).

17. The conveyor according to one or more of the preceding claims, **characterized in that** said rollers (5) comprise a second end (5b) that lies opposite said first end (5a), said pair of side walls (4, 6) comprising respectively a first side wall (4) for supporting said first ends (5a) and a second side wall (6) for supporting said second end (5b).

18. The conveyor according to one or more of the preceding claims, **characterized in that** at least one between said first side wall (4) and said second side wall (6) comprises a pair of longitudinal members (27, 28) that are mutually substantially parallel and are superimposed on a substantially vertical plane, an inner plate (29, 30) for closing said side walls (4, 6) on the inner side, which is directed toward said rollers (5), and an outer plate (31, 32) for closing said side walls (4, 6) on the outer side, which lies opposite said rollers (5), both plates (29, 30, 31, 32) being rigidly and detachably associable with said longitudinal members (27, 28).

19. The conveyor according to claim 18, **characterized in that** said spur gears (9) and said auxiliary spur gears (10) are supported so that they can rotate between the longitudinal members (27, 28) of said first side wall (4).

20. The conveyor according to one or more of the claims 18-19,
**characterized in that** said inner plate (29) of said first side wall (4) comprises openings (33) for the passage of said rollers (5) and said holes (19) for inserting the bushes (17) that are associated with said auxiliary spur gears (10) and said outer plate (31) of said first side wall (4) comprises said holes (19) for inserting the bushes (17) associated with said spur gears (9) and with said auxiliary spur gears (10).

21. The conveyor according to one or more of the claims 18-20,
**characterized in that** said inner plate (30) of said second side wall (6) comprises passage openings (34) for said rollers (5), said outer plate (32) of said second side wall (6) comprising said holes (19) for inserting the bushes (17) for supporting said second ends (5b) of the rollers (5).

22. The conveyor according to one or more of the preceding claims, **characterized in that** said motor means (7) are associated with an intermediate roller (5) of said succession.

23. The conveyor according to one or more of the preceding claims, **characterized in that** said motor means are associated with an end roller of said succession.

24. The conveyor according to one or more of the preceding claims, **characterized in that** it comprises a control unit for controlling and driving said motor means (7).

25. The conveyor according to one or more of the preceding claims, **characterized in that** said spur gears (9) and/or said auxiliary spur gears (10) are made of POM, polyamide, polyacetal or the like.

26. The conveyor according to one or more of the claims 7-25,
**characterized in that** said bushes (17) are made of nylon or the like.

## Patentansprüche

1. Stetigförderer mit motorisierten Rollen, mit zwei sich in Längsrichtung erstreckenden Seitenwänden (4,6), an denen jeweils mit einander gegenüberliegenden Enden (5a,5b) drehbar eine Mehrzahl von Rollen (5) in aufeinander folgender Anordnung gelagert sind, und mit motorischen Antriebsmitteln (7), die Bewegungs-Übertragungs-Mitteln (8) zugeordnet sind, die zum rotatorischen Antrieb der Rollen (5) um deren Längsachsen (A) vorgesehen sind, wobei die Übertragungsmittel (8) je ein Stirnrad (9) umfassen, das in unmittelbarer Nähe mit einem ersten Ende (5a) jeder der genannten Rollen (5) starr koppelbar ist, sowie mit einem Hilfs-Stirnrad (10), das als freilaufendes Zahnrad zwischen den Stirnrädern (9) jedes der aufeinander folgenden Paare von Rollen (5) angeordnet ist, und wobei jede der Rollen (5) von der vorausgehenden Rolle angetrieben wird und selbst die nachfolgende Rolle (5) antreibt, **dadurch gekennzeichnet, dass** motorische Antriebsmittel (7) für mindestens eine der Rollen (5) vorgesehen sind oder für mindestens eines der Hilfsstirnräder (10), wobei die Stirnräder und die Hilfsstirnräder (10) jeweils eine Nabe (11) haben, die an ihren einander gegenüberliegenden Enden mit Verlängerungen (12,13) versehen ist, die jeweils von einander abgewandten Stirnflächen (14,15) der Stirnräder (9,10) abstehen und derart ausgelegt sein können, dass sie drehbar in entsprechenden Drehlager-Sitzen (16) gelagert werden können, die in die seitlichen Längswände (4,6) eingearbeitet oder mit diesen verbindbar sind.

2. Stetigförderer nach Anspruch 1, **dadurch gekennzeichnet, dass** die Stirnräder (9) mit dem Endabschnitt des jeweils ersten Rollenendes (5a) starr verbindbar sind.

3. Stetigförderer nach Anspruch 1 oder Anspruch 2, **dadurch gekennzeichnet, dass** Befestigungsmittel (24,25) zur Fixierung der Stirnräder (9) an den Rollen (5) vorgesehen sind.

4. Stetigförderer nach einem der Ansprüche 1 bis 3, **dadurch gekennzeichnet, dass** die Stirnräder (9) und die Hilfsstirnräder (10) dem Typ nach geradverzahnte Räder sind.

5. Stetigförderer nach einem der vorhergehenden Ansprüche, **dadurch gekennzeichnet, dass** die Stirnräder (9) und die Hilfsstirnräder (10) jeweils im wesentlichen denselben Teilungskreisdurchmesser haben.

6. Stetigförderer nach einem der vorhergehenden Ansprüche, **dadurch gekennzeichnet, dass** die Stirnräder (9) und die Hilfsstirnräder (10) die selbe Form haben.

7. Stetigförderer nach einem der vorhergehenden Ansprüche, **dadurch gekennzeichnet, dass** die Drehlager-Sitze (16) durch Lagerbuchsen (17) gebildet sind, die starr mit den Seitenwänden (4,6) verbindbar sind.

8. Stetigförderer nach Anspruch 7, **dadurch gekennzeichnet, dass** die Buchsen (17) einen rohrförmigen Abschnitt (18) haben, der den Drehlager-Sitz (16) bildet und in eine entsprechende Öffnung (19), die an den Seitenwänden (4,6) gebildet ist, einpassbar sind, sowie mit einem Flansch (20) für die Befestigung an den Seitenwänden (4,6) verbunden sind, und dass Befestigungsmittel (21) zur Verankerung des Flansches (20) an den Seitenwänden (4,6) vorgesehen sind.

9. Stetigförderer nach Anspruch 8, **dadurch gekennzeichnet, dass** die Verankerungsmittel (21) in der Art von Gewindeschrauben ausgebildet sind.

10. Stetigförderer nach einem der Ansprüche 3 bis 9, **dadurch gekennzeichnet, dass** die Befestigungsmittel Schrauben (24) umfassen, die durch Öffnungen (25) hindurchtretend einführbar sind, die an den Stirnrädern (9) gebildet sind und mit entsprechenden Aufnahmen (26) in Eingriff gelangen können, die am Kopfende des genannten ersten Endes (5a) der Rollen (5) gebildet sind.

11. Stetigförderer nach einem der vorhergehenden Ansprüche, **dadurch gekennzeichnet, dass** die Rollen (5) innen hohl sind und eine außenseitige und eine innenseitige - laterale - Begrenzungsfläche haben.

12. Stetigförderer nach Anspruch 10 oder Anspruch 11, **dadurch gekennzeichnet, dass** die Aufnahmen (26) mindestens ein Kreisbogen-Element umfassen, das in einer im wesentlichen rechtwinklig zur Längsachse (A) der Rollen (5) verlaufenden Ebene liegt und so gestaltet ist, dass es von der lateral inneren Fläche der Rollen (5) zentripetal vorspringt.

13. Stetigförderer nach einem der Ansprüche 10 bis 12, **dadurch gekennzeichnet, dass** jeweils drei solcher Aufnahmen (26) vorgesehen sind, die mit konstantem Teilungsabstand am Umfangsbereich der lateral inneren Begrenzungsfläche angeordnet sind.

14. Stetigförderer nach einem der vorhergehenden Ansprüche, **dadurch gekennzeichnet, dass** die Rollen (5) mindestens auf einem Teil ihrer lateral äußeren Oberfläche mit Rändelungen (Z) versehen sind.

15. Stetigförderer nach Anspruch 14, **dadurch gekennzeichnet, dass** die Rändelungen (Z) sich in Längsrichtung entlang der lateral äußeren Oberfläche der Rollen (5) erstrecken.

16. Stetigförderer nach Anspruch 14 oder Anspruch 15, **dadurch gekennzeichnet, dass** die Rändelungen (Z) mit einer im wesentlichen konstanten Teilung längs der gesamt lateral äußeren Oberfläche der Rollen (5) vorhanden sind.

17. Stetigförderer nach einem der vorhergehenden Ansprüche, **dadurch gekennzeichnet, dass** die Rollen (5) ein dem ersten Ende (5a) gegenüberliegend angeordnetes zweites Ende (5b) umfassen, und dass das Paar von Seitenwänden (4, 6) dementsprechend eine erste Seitenwand (4) zur Lagerung der ersten Rollenenden (5a) und eine zweite Seitenwand (6) zur Lagerung der zweiten Rollenenden (5b) umfasst.

18. Stetigförderer nach einem der vorhergehenden Ansprüche, **dadurch gekennzeichnet, dass** mindestens eine der beiden seitlichen Längswände (4) bzw. (6) ein Paar von Längsträgerelementen (27, 28) umfasst, die im wesentlichen parallel zueinander verlaufen und in einer im wesentlichen vertikalen Ebene übereinander angeordnet sind, sowie eine innere Platte (29, 30) zum Abschluss der seitlichen Längswände (4, 6) an deren Innenseite, die den Rollen (5) zugewandt ist, und eine äußere Platte (31, 32) zum Abschluss der Seitenwände (4, 6) an deren äußerer, den Rollen (5) abgewandter Seite, wobei beide Platten (29, 30) bzw. (31, 32) lösbar fest mit den Längsträgerelementen (27, 28) verbindbar sind.

19. Stetigförderer nach Anspruch 18, **dadurch gekennzeichnet, dass** die Stirnräder (9) und die Hilfsstirnräder (10) so gelagert sind, dass sie zwischen den Längsträgerelementen (27, 28) der einen, ersten Seitenwand (4) drehbar angeordnet sind.

20. Stetigförderer nach Anspruch 18 oder Anspruch 19, **dadurch gekennzeichnet, dass** die innenseitige Platte (29) der ersten Seitenwand (4) Öffnungen (33) umfasst, durch die die Rollen (5) hindurchtreten können, sowie die Löcher (19) zum Einsetzen der Lagerbuchsen (17),die den Hilfsstirnrädern (10) zugeordnet sind, und dass die Außenplatte (31) der ersten Seitenwand (4) mit den Löchern (19) zum Einsetzen der Buchsen (17) versehen ist, die den Stirnrädern (9) und den Hilfsstirnrädern (10) zugeordnet sind.

21. Stetigförderer nach einem der Ansprüche 18 bis 20, **dadurch gekennzeichnet, dass** die innenseitige Platte (30) der zweiten Seitenwand (6) mit Durchtrittsöffnungen (34) für die Rollen (5) versehen ist, und dass die Außenplatte (32) der zweiten Seitenwand (6) mit den Löchern (19) zum Einsetzen derjenigen Buchsen (17) versehen ist, in denen die zweiten Enden (5b) der Rollen (5) gelagert sind.

22. Stetigförderer nach einem der vorhergehenden Ansprüche, **dadurch gekennzeichnet, dass** die motorischen Antriebseinrichtungen (7) innerhalb der Rollenfolge einer inneren Rolle (5) zugeordnet sind.

23. Stetigförderer nach einem der vorhergehenden Ansprüche, **dadurch gekennzeichnet, dass** motorische Antriebsmittel einer endständigen Rolle der Rollenfolge zugeordnet sind.

24. Stetigförderer nach einem der vorhergehenden Ansprüche, **dadurch gekennzeichnet, dass** zur Steuerung und zum Antrieb der motorischen Antriebsmittel eine Steuereinheit vorgesehen ist.

25. Stetigförderer nach einem der vorhergehenden Ansprüche, **dadurch gekennzeichnet, dass** die Stirnräder (9) und/oder die Hilfsstirnräder (10) aus POM (Polyoximethylen), Polyamid, Polyazetal oder dergleichen gefertigt sind.

26. Stetigförderer nach einem der Ansprüche 7 bis 25, **dadurch gekennzeichnet, dass** die Lagerbuchsen (17) aus Nylon oder dergleichen hergestellt sind.

## Revendications

1. Convoyeur continu à rouleaux motorisés, comprenant deux parois latérales longitudinales (4, 6) qui supportent en rotation respectivement les extrémités opposées (5a, 5b) d'une pluralité de rouleaux (5) agencés en succession l'un derrière l'autre, et des moyens de moteur (7) qui sont associés à des moyens de transmission (8) de mouvement aptes à actionner lesdits rouleaux (5) afin qu'ils tournent autour de leur axe longitudinal (A), lesdits moyens de transmission (8) comprenant un engrenage droit (9), qui est associable de manière rigide à une première extrémité (5a) de chacun desdits rouleaux (5), et un engrenage droit auxiliaire (10), qui est interposé sous forme d'engrenage intermédiaire entre les engrenages droits (9) de chaque paire de rouleaux successifs (5), et chacun des autres rouleaux (5) étant entraîné par le rouleau (5) qui le précède et entraînant le rouleau (5) qui le suit,
***caractérisé en ce que*** lesdits moyens de moteur (7) sont associés à au moins l'un desdits rouleaux (5) ou à au moins l'un desdits engrenages droits auxiliaires (10), lesdits engrenages droits (9) et lesdits engrenages droits auxiliaires (10) comprenant un moyeu (11) qui possède, sur ses extrémités opposées, des prolongements (12, 13) qui font respectivement saillie des faces opposées (14, 15) desdits engrenages (9, 10) et peuvent être reçus de manière à pouvoir tourner dans des logements pour rotation correspondants (16) qui sont formés dans lesdites parois latérales (4, 6) ou sont associables à celles-ci.

2. Convoyeur selon la revendication 1, ***caractérisé en ce que*** lesdits engrenages droits (9) sont associables de manière rigide à la pointe de ladite première extrémité (5a).

3. Convoyeur selon l'une ou plusieurs des revendications précédentes, ***caractérisé en ce qu'***il comprend des moyens (24, 25) pour fixer lesdits engrenages droits (9) auxdits rouleaux (5).

4. Convoyeur selon l'une ou plusieurs des revendications précédentes, ***caractérisé en ce que*** lesdits engrenages droits (9) et lesdits engrenages droits auxiliaires (10) sont du type à dents droites.

5. Convoyeur selon l'une ou plusieurs des revendications précédentes, ***caractérisé en ce que*** lesdits engrenages droits (9) et lesdits engrenages droits auxiliaires (10) ont sensiblement le même diamètre primitif.

6. Convoyeur selon l'une ou plusieurs des revendications précédentes, ***caractérisé en ce que*** lesdits engrenages droits (9) et lesdits engrenages droits auxiliaires (10) ont la même forme.

7. Convoyeur selon l'une ou plusieurs des revendications précédentes, ***caractérisé en ce que*** lesdits logements (16) pour rotation sont formés par des manchons (17) qui sont associables de manière rigide auxdites parois latérales (4, 6).

8. Convoyeur selon la revendication 7, ***caractérisé en ce que*** lesdits manchons (17) comportent une portion tubulaire (18) qui forme ledit logement (16) pour rotation et peut être insérée avec ajustement serré dans un trou correspondant (19) formé dans lesdites parois latérales (4, 6) et est raccordée à une bride (20) pour un couplage auxdites parois latérales (4, 6), des moyens (21) étant prévus pour ancrer ladite bride (20) auxdites parois latérales (4, 6).

9. Convoyeur selon la revendication 8, ***caractérisé en ce que*** lesdits moyens d'ancrage (21) sont de type fileté.

10. Convoyeur selon l'une ou plusieurs des revendications 3 à 9, ***caractérisé en ce que*** lesdits moyens de fixation comprennent des moyens de vis (24) qui peuvent être insérés dans des trous traversants (25) qui sont formés dans lesdits engrenages droits (9) et peuvent engager des réceptacles correspondants (26) formés à la pointe de ladite première extrémité (5a) des rouleaux (5).

11. Convoyeur selon l'une ou plusieurs des revendications précédentes, ***caractérisé en ce que*** lesdits rouleaux (5) sont intérieurement creux et comprennent une surface latérale extérieure et une surface latérale intérieure.

12. Convoyeur selon l'une quelconque des revendications 10 ou 11, ***caractérisé en ce que*** lesdits réceptacles (26) comprennent au moins un arc de cercle qui se trouve dans un plan qui est sensiblement perpendiculaire à l'axe longitudinal (A) desdits rouleaux (5) et est formé de manière à saillir de manière centripète de la surface latérale interne desdits rouleaux (5).

13. Convoyeur selon l'une ou plusieurs des revendications 10 à 12, ***caractérisé en ce que*** lesdits réceptacles (26) sont au nombre de trois, répartis selon un écartement constant le long de la circonférence périmétrique de ladite surface latérale intérieure.

14. Convoyeur selon l'une ou plusieurs des revendications précédentes, ***caractérisé en ce que*** lesdits rouleaux (5) comprennent des moletages (Z) formés sur une partie au moins de leur surface latérale extérieure.

15. Convoyeur selon la revendication 14, ***caractérisé en ce que*** lesdits moletages (Z) sont disposés longitudinalement le long de la surface latérale extérieure desdits rouleaux (5).

16. Convoyeur selon l'une quelconque des revendications 14 ou 15, ***caractérisé en ce que*** lesdits moletages (Z) sont distribués selon un écartement essentiellement constant sur la totalité de la surface latérale extérieure desdits rouleaux (5).

17. Convoyeur selon l'une ou plusieurs des revendications précédentes, ***caractérisé en ce que*** lesdits rouleaux (5) comprennent une deuxième extrémité (5b) qui est opposée à ladite première extrémité (5a), ladite paire de parois latérales (4, 6) comprenant respectivement une première paroi latérale (4) pour supporter ladite première extrémité (5a) et une deuxième paroi latérale (6) pour supporter ladite deuxième extrémité (5b).

18. Convoyeur selon l'une ou plusieurs des revendications précédentes, ***caractérisé en ce qu'***au moins une d'entre ladite première paroi latérale (4) et ladite deuxième paroi latérale (6) comprend une paire d'éléments longitudinaux (27, 28) qui sont sensiblement parallèles entre eux et sont superposés sur un plan sensiblement vertical, une plaque intérieure (29, 30) pour obturer lesdites parois latérales (4, 6) sur le côté intérieur, qui est orientée vers lesdits rouleaux (5), et une plaque extérieure (31, 32) pour obturer lesdites parois latérales (4, 6) sur le côté extérieur, qui est opposée auxdits rouleaux (5), les deux plaques (29, 30, 31, 32) étant associables de manière rigide et détachable avec lesdits éléments longitudinaux (27, 28).

19. Convoyeur selon la revendication 18, ***caractérisé en ce que*** lesdits engrenages droits (9) et lesdits engrenages droits auxiliaires (10) sont supportés de manière à pouvoir tourner entre les éléments longitudinaux (27, 28) de ladite première paroi latérale (4).

20. Convoyeur selon l'une ou plusieurs des revendications 18-19, ***caractérisé en ce que*** ladite plaque intérieure (29) de ladite première paroi latérale (4) comprend des ouvertures (33) pour le passage desdits rouleaux (5) et lesdits trous (19) pour l'insertion des manchons (17) qui sont associés auxdits engrenages droits auxiliaires (10), et ladite plaque extérieure (31) de ladite première paroi latérale (4) comprend lesdits trous (19) pour l'insertion des manchons (17) associés auxdits engrenages droits (9) et auxdits engrenages droits auxiliaires (10).

21. Convoyeur selon l'une ou plusieurs des revendications 18 à 20, ***caractérisé en ce que*** ladite plaque intérieure (30) de ladite deuxième paroi latérale (6) comprend des ouvertures de passage (34) pour lesdits rouleaux (5), ladite plaque extérieure (32) de ladite deuxième paroi (6) comprenant lesdits trous (19) pour l'insertion des manchons (17) destinés à supporter lesdites deuxièmes extrémités (5b) des rouleaux (5).

22. Convoyeur selon l'une ou plusieurs des revendications précédentes, ***caractérisé en ce que*** lesdits moyens de moteur (7) sont associés à un rouleau intermédiaire (5) de ladite succession.

23. Convoyeur selon l'une ou plusieurs des revendications précédentes, ***caractérisé en ce que*** lesdits moyens de moteur sont associés à un rouleau d'extrémité de ladite succession.

24. Convoyeur selon l'une ou plusieurs des revendications précédentes, ***caractérisé en ce qu'***il comprend une unité de commande pour commander et entraîner lesdits moyens de moteur (7).

25. Convoyeur selon l'une ou plusieurs des revendications précédentes, ***caractérisé en ce que*** lesdits engrenages droits (9) et/ou lesdits engrenages droits auxiliaires (10) sont faits de POM (polyoxyméthylène), de polyamide, de polyacétal ou similaire.

26. Convoyeur selon l'une ou plusieurs des revendications 7 à 25, ***caractérisé en ce que*** lesdits manchons (17) sont faits de nylon ou similaire.
